(19) Europäisches Patentamt
European Patent Office
Office européen des brevets

(11) **EP 3 928 898 A1**

(12) **EUROPEAN PATENT APPLICATION**

(43) Date of publication:
**29.12.2021 Bulletin 2021/52**

(51) Int Cl.:
**B22F 3/105** (2006.01) **B29C 64/153** (2017.01)
**B29C 64/371** (2017.01) **B33Y 10/00** (2015.01)
**B33Y 30/00** (2015.01)

(21) Application number: **20182341.6**

(22) Date of filing: **25.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SLM Solutions Group AG**
**23560 Lübeck (DE)**

(72) Inventors:
• **Brück, Daniel**
**23560 Lübeck (DE)**

• **Peng, Zhuo**
**23560 Lübeck (DE)**
• **Iqbal, Naveed**
**23560 Lübeck (DE)**
• **Kuntoff, Torsten**
**23560 Lübeck (DE)**
• **Jargstorf, Hendrik**
**23560 Lübeck (DE)**

(74) Representative: **Lohr, Jöstingmeier & Partner**
**Junkersstraße 3**
**82178 Puchheim/München (DE)**

(54) **ADDITIVE MANUFACTURING APPARATUS AND METHOD FOR OPERATING THE APPARATUS**

(57) A process chamber housing 1 for an additive manufacturing apparatus comprising a process chamber with a bottom 9, a ceiling 10 and walls 11, 12, 21, 22 jointly enclosing a volume of the process chamber 5, with a gas inlet 6 in a front wall 21 and with a gas outlet 7 in a rear wall 22 of the side walls 11, 12, 21, 22, wherein the gas inlet 6 and the gas outlet 7 are positioned at opposite sides of an opening 91 the bottom and both facing towards the each other allows for an improved removal of smoke out of the process chamber if the gas inlet 6 has a width $w_i$, the opening 91 has a width $w_s$ and the gas outlet has a width $w_o$, obeying at least one of the relations (i) $w_i \geq w_s \pm 4cm$ and $w_o \geq w_s \pm 4cm$; (ii) $w_i \geq w_s$ and/or $w_o \geq w_s$; and/or (iii) $w_i \geq w_s + 1cm$ and/or $w_o \geq w_s + 1cm$.

Fig. 1

EP 3 928 898 A1

## Description

## Field of the invention

The invention relates to a process chamber housing for an additive manufacturing apparatus. The process chamber housing comprises a process chamber. The process chamber is at least defined by a bottom, a ceiling and side walls, jointly enclosing a volume of the process chamber. A gas inlet into the process chamber enables a gas flow into the process chamber, and a gas outlet enables to release the gas flow out of the process chamber. The bottom has an opening configured to receive a movable support for supporting a three dimensional (3D) object during the process of additive manufacturing. The gas inlet and the gas outlet are preferably positioned at opposite sides of the opening and both face towards each other, thereby being configured to provide a gas flow in a main flow direction over the opening, i.e. from the gas inlet in a front wall of the side walls to the gas outlet in a rear wall of the side walls. The invention further relates to an additive manufacturing apparatus with the process chamber housing.

## Description of the related art

Additive manufacturing is a growingly important and capable method of manufacturing 3D workpieces. There are different variants of additive manufacturing, but herein we focus on methods and an apparatus for joining powder particles by selectively heating particles, e.g. on top of a bed of powder particles to adhere some of the particles to each other. The powder particles are adhered by sintering, fusing and/or welded to each other. The heat for these processes is typically provided by preferably focused radiation, for example by an electron beam or by a laser beam, selectively heating portions of the top layer of the powder bed, thereby attaching particles of the top layer to particles of a preceding layer. This process is generally referred to as powder bed fusion process or simply powder-fusion process. Herein we will not distinguish between different types of radiation and will simply refer to "beam" or "beams".

Modern apparatus for powder-bed fusion have a housing with a process chamber. The process chamber has a support-opening for accommodating a movably supported support. Initially, a thin layer of powder is applied to the support. This is mostly accomplished by a recoater. The recoater is a vehicle driven forth and back over the opening in the bottom, thereby coating the support with a layer of powder. Recoaters have been described in a number of publications, e.g. in WO 2018/156264 A1, WO 2017/143145A1, EP 1 234 625 A and DE102006056422B3, to name only a few. These recoaters can be distinguished very roughly in two groups (i) powder is supplied to the bottom of the process chamber, e.g. by an opening next to the support for the workpiece and subsequently distributed by a distributor. Typically a distributor has at least one of a blade, a roller, a lip or a similar means configured for traveling over the support to thereby form a layer of fresh powder over the support and (ii) a powder reservoir is movably supported to travel over the support thereby applying a layer of fresh powder on the support. Often, the recoater of the second group as well comprise one or more distributors for planing the powder layer. Once a fresh layer of powder has been applied, a beam is moved over the coated surface, thereby adhering some powder grains to each other and in some cases as well to the support. The support is subsequently lowered and the recoater applies the next layer of powder. The next layer is as well subjected to the beam for selectively adhering powder grains to each other and the structure of previously adhered grains. The process of lowering the support, applying a new layer of powder and laser *"writing"* is iterated to thereby obtain a 3D object. This process has been described by a number of publications, e.g. in US 2017/0001243 A1, US 9,061,465B2, to name only two.

As taught, e.g. by EP 3 321 003, the process chamber is advantageously filled with an inert gas. During the additive manufacturing process, the inert gas flows from a gas inlet over the bottom and thus over the top layer of powder on the support to a gas outlet. EP 3 321 003 aims for an essentially laminar flow of inert gas to thereby remove fumes, smoke or other side products of the fusing process. To this end, the inlet opening is made of a porous material to thereby release an essentially homogenous flow of the inert gas through the process chamber.

## Summary of the invention

The problem underlying the invention is to shorten manufacturing times without decreasing the quality of the workpieces.

Solutions of the problem are described in the independent claims. The dependent claims relate to further improvements of the invention.

It has been suggested to increase the number of beams for simultaneously fusing the powder to thereby reduce manufacturing times. The invention is based on the observation that with an increasing number of beams simultaneously fusing powder, the flow rate of the inert gas through the process chamber has to be increased to ensure that smoke residues of the fusing process are reliably transported to the gas outlet. This increase in gas flow rate leads to an increase in fluctuations of the flow velocity. As a consequence, in some portions of the process chamber the powder is withdrawn from the powder bed due to locally increased flow velocity. This partial powder depletion of the powder bed, however, is detrimental to the quality of the workpiece to be manufactured.

The invention solves the problem of shortening the additive manufacturing time for a given 3D workpiece, e.g., by reducing fluctuations of the flow velocity of the inert gas flowing from the gas inlet to the gas outlet, at least in the vicinity of the upper layer of the powder bed.

The invention provides a process chamber housing for an additive manufacturing process, in particular for the powder bed fusion process. The process chamber housing provides an improved process chamber enabling to increase the inert gas flow rate through the process chamber, without depletion of the powder bed due to local flow rate maxima. As usual, the process chamber has a bottom, a ceiling and walls, i.e. a front wall, rear wall and two side walls each connecting the front wall with the rear wall. The walls each connect the bottom and the ceiling). The bottom, the ceiling and the walls jointly enclose a volume of the process chamber and thus define the process chamber. The bottom has a support opening, i.e. at least one support opening, configured to receive a movable support, i.e. at least one movable support, for supporting a 3D object during the process of additive manufacturing. The optional support may be movably supported, e.g., configured for being retracted downwards below the surface of the bottom, i.e. into the support opening. After each retraction, an optional recoater may apply a new layer of the powder, which is subsequently selectively fused by an energy source, like e.g. a laser.

The process chamber has a gas inlet for providing a gas flow into the process chamber and a gas outlet for releasing the gas flow out of the process chamber. The gas inlet and the gas outlet are preferably at opposite sides of the process chamber. For example, the gas inlet and the gas outlet may be positioned at opposite sides of the support opening and may both face towards the respective other. They may thus be configured to provide a gas flow in a main flow direction through the process chamber over the support opening, from the gas inlet to the gas outlet. Smoke produced during the fusion process is thus transported by the inert-gas flow to the gas outlet and thereby removed from the process chamber.

In a preferred example, the gas inlet has a width $w_i$, the support opening has a width $w_s$ and the gas outlet has a width $w_o$, the widths $w_i$, $w_o$ and $w_s$ being measured perpendicularly to the main flow direction. Particularly preferred $w_i \geq w_s \pm 4$cm and/or $w_o \geq w_s \pm 4$cm (the error margin is preferably smaller, e.g. 2cm, 1cm, 0.5cm or less, particularly preferred 0cm), thus the widths of the inlet and or outlet openings are preferably at least essentially (as expressed by the error margins $\pm 4$cm) greater or equal to the width of the support. In operation, this measure provides for a homogenous gas flow over the entire width of the support opening, and thus over the entire width of the powder bed. Additionally or alternatively obeying the relation $w_i \geq w_s \pm 15\%$ and/or $w_o \geq w_s \pm 15\%$ of $w_s$ can be applied. Preferably, $w_i$, $w_o$ and $w_s$ obey the relation $w_i \geq w_s$ and/or $w_o \geq w_s$, even more preferred $w_i \geq w_s + d_w$ and/or $w_o \geq w_s + d_d$, wherein $d_w \leq 5$cm, e.g. $d_d \in \{5cm, 4cm, 3cm, 2cm, 1cm, 0.5cm\}$. Particularly preferred, the width of the gas inlet $w_i$ is at least essentially identical to the distance $d_{12}$ between the first

and the second sidewalls, wherein at least essentially identical implies that $w_i = d_{12}$ is preferred, but slightly smaller $w_i$ can be accepted, e.g. $w_i \geq d_{12} - 1cm$, $w_i \geq d_{12} - 0.5$cm and/or $w_i \geq d_{12} - 0.25cm$.

The above (and below) relations are based on the assumption that in a preferred example the support opening defines the usable width of powder bed $w_{upb}$, i.e. $w_{upb} = w_s$. In case the usable width $w_{upb}$ is defined elsewise, the corresponding dimension may take the position of $w_s$ in the above relations. In other words, in the above relations $w_s$ may be replaced by $w_{upb}$. The usable width $w_{upb}$ is may be defined by the minimum of the widths of the powder bed $w_b$ and the width the beam can span (being symbolized by $w_r$) perpendicular to the flow direction at the height of the top of the powder bed, 'beam span $w_r$' for short.

In practice the beam span $w_r$ is preferably limited by the firmware controlling the deflection of the beam at least essentially to the width of the support opening to thereby enhance safety and the maximum dimension of the workpieces that can be manufactured. Hence, one could artificially reduce the width of the usable powder bed $w_{upb}$ by adjustments to or by the firmware to thereby increase the quality of the manufactured workpiece when sacrificing the maximum dimension of the workpieces. For example, the firmware may provide for different modes associated to different product quality levels. For example the firmware may have a first mode, in which the beam span $w_r$ is limited to the width of the support opening $w_s$ and a second mode in which the beam span $w_r$ is reduced to thereby artificially reduce the width of the usable powder bed $w_{upb}$ to thereby obtain artificially a smaller $w_{upb}$ This artificial constraint by the firmware may not be misunderstood to be realized by producing only a single small workpiece on a large powder bed, although the firmware would allow a beam deflection covering the entire width of the powder bed. The term "firmware" describes any software which is not changed by a user when adapting an additive manufacturing apparatus to manufacture a particular workpiece. The firmware so to speak operates the manufacturing apparatus and provides a user interface configured for providing the information about the workpiece to be manufactured to the additive manufacturing apparatus. In other examples, the beam span $w_r$ may be limited mechanically or optically.

The width of the usable powder bed hence defines the maximum width of the built area. In this sense one may define $w_s$ as $w_s = Min(w_b, w_r)$. In practice, the beam can usually span (at least) the entire powder bed, i.e. it can be pivoted from one end to the opposed end of the powder bed, to thereby maximize the maximum dimension of the 3D-piece that can be produced with a given apparatus. Similarly, in practice the width of the opening $w_s$ limits the width of the powder bed. Hence in practical applications a preferred design goal is $w_b = w_s$ and/or $w_r \geq Max(w_b, w_s)$. Only for simplicity, we used above the width of the support opening $w_s$ instead of the

usable width of the powder bed, as the width of the support opening provides a vivid reference, because the support opening is visible even if the apparatus comprising the housing is not in operation.

In a preferred example the widths of the gas inlet and of the gas outlet are at least essentially equal, e.g. $w_i = w_o \pm d_1$, wherein $d_1 \leq 5cm$, e.g. $d_1 \in \{5cm, 4cm, 3cm, 2cm, 1cm, 0.5cm, 0.25cm, 0cm\}$, smaller values of $d_1$ are preferred.

Particularly preferred, the process chamber has a free width $w_c(l, h)$. The free width $w_c(l, h)$ is measured perpendicular to the main flow direction over the support opening and may be a function of a distance $l$ from a vertical plane being defined by the gas inlet and a height $h$ over a horizontal plane being defined by the bottom, wherein $w_c(l, h) = c \pm \Delta_w \cdot w_{max} \forall l \in [l_1, l_2]$, at a given height $h$ over the bottom, wherein $l_1$ may be the distance of the opening to a vertical plane defined by the gas inlet, $l_2 = l_1 + l_s$, $l_s$ is the extension of the opening in the main flow direction, $w_{max} = max(w_c(l, h))$ and $c$ is a constant. $\Delta_w$ is preferably small, e.g. $\Delta_w \in [0.15, 0]$. Preferred values of $\Delta_w$ are $\Delta_w \in \{0.15, 0.1, 0.075, 0.05, 0.025, 0.01, 0\}$, smaller absolute values of $\Delta_w$ are preferred over greater values. Only to avoid any misunderstanding, the width is measured parallel to the bottom of the process chamber. As usual, we assume the bottom to be at least essentially horizontal.

Particularly preferred, the changes in the free width are continuous, i.e. $\dfrac{dw_c}{dl}$ may be finite and it absolute value may preferably be small, for example

$$\left| \frac{dw_c(l,h)}{dl} \right| \leq \Delta_w \, \forall l \in [l_1, l_2]$$

at given height $h$, wherein smaller values of $\Delta_w$ are preferred over greater values. This measure ensures that the flow of the inert gas remains attached to the side walls. Turbulences are reduced and the variations in the flow speed of the inert gas are minimized. Keeping the second derivative low,

$$\left| \frac{d^2 w_c(l,h)}{dl^2} \right| \leq \Delta_w \forall l \in [l_1, l_2]$$

at least for the given height $h$, further enhances the inert gas flow.

In other words, (at least) along the entire length of the bottom's support opening, variations in the free width of the process chamber are minimized. Thus, vortices created by the side walls to the left and to the right of the bottom's support opening are minimized, preferably eliminated. In any case, the condition $w_c(l, h) = c \pm \Delta_w \cdot w_{max}, \forall l \in [l_1, l_2]$, at a given height $h$ over the bottom ensures that vortices due to changes in the width $w_c(l, h)$ of the process chamber have no significant impact on the flow rate of the inert gas over the support opening. Accordingly, in operation, powder transportation by the air flow can be minimized while maintaining the flow rate high. To avoid ambiguities, the free width can significantly differ from the distance between two opposed side walls, in case an object is positioned for example between a side wall and the support opening. The free width is thus the maximum free passage provided to the inert-gas flow over the support opening at given values of $l, h$.

Small gaps in the side walls, e.g. to allow portions of side walls to be moved relative to each other, shall be considered to be closed by a virtual flush cover when determining the free width. In practice the gaps may preferably be sealed. The gap can be considered small, if the diameter of vortices of the inert-gas flow created by the gap are smaller than the distance between the second side wall and the support opening. For practical purposes gaps are "small" if their width $g_l$ is lower (or equal) than (or to) 5mm, i.e. $g_l \leq g_m$, wherein $g_m \in \{6mm, 5mm, 4mm, 3mm, 2mm, 1mm, 0.5mm\}$; again, smaller values are preferred.

Preferably, the free width $w_c(l, h)$ is not only at least essentially constant for a single given height $h$, but for a number of heights in the vicinity of the bottom, for example for any $h \in [h_{min}, h_{int}]$, wherein $0 \leq h_{min} \leq 0.1 \cdot h_{max}$, and $h_{min} \leq h_{int} \leq 0.25 h_{max}$ and $h_{max}$ may be the height of the process chamber from the bottom to the ceiling. A change in the width $w_c(l, h)$ as a function of h is possible and may be e.g. used to increase the flow rate of the inert gas in a layer (of non-zero height) at some distance above the bottom, to transport smoke faster to the outlet, once the smoke reached a given height.

The process chamber housing may comprise a recoater, i.e. at least one recoater, being movably supported to traverse the support opening in a forward and subsequently in a backward movement and being configured to apply a layer of powder onto the area being enclosed by the rim of the support opening. For example, the movable support of the recoater may be provided by at least one guide rail, preferably by a pair of guide rails. These guide rails may be formed e.g. by a slot in the bottom or any other means known in the art. For example at least one guide rail may be attached to and/or integrated in a front wall and/or a rear wall. A drive may be provided to move the recoater forth and back. In operation, the recoater may apply subsequent layers of powder onto the powder bed on top of the support, when being driven forth and back. In other words, the optional recoater may be movably supported and configured to move from a first position in the process chamber in a forward direction over the support opening (and thus the optional support) to a second position and in a backward direction from the second position to the first position, wherein the recoater has a front side and a rear side facing in the direction of a forward and backward movement of the recoater, respectively. Particularly preferred, the forward and backward directions are at least essentially (e.g. within $\pm 15°$, $\pm 7.5°$, $\pm 5°$, $\pm 2.5°$ or less) perpendicular to the main flow direction.

In an example, the front side of the recoater, when in the recoater is in its first position, may delimit the free width $w_c(l, h)$, for a range of heights $h$, wherein $h \in [h_{reb1}, h_{ret1}]$, wherein the $h_{reb1}$ is the height of the front side of the recoater above the bottom (preferably $h_{reb1}=0$) and $h_{ret}$ is a value greater that $h_{reb1}$ ($h_{reb1} < h_{ret1}$). Preferably, $h_{ret1}$ is the height of the recoater. Alternatively or in addition, the rear side of the recoater, when the recoater is in its second position may delimit the free width $w_c(l, h)$, for a range of heights $h$, wherein $h \in [h_{reb2}, h_{ret2}]$, wherein the $h_{reb2}$ is the height of the front side of the recoater above the bottom (preferably $h_{reb2}=0$) and $h_{ret2}$ is a value greater that $h_{reb2}$ ($h_{reb2} < h_{ret2}$). Preferably, $h_{ret2}$ is the height of the recoater. However it should be noted that the technical effect of avoiding turbulences is obtained already if $h_{reti}$ ($i \in \{1,2\}$) is sufficiently big (i.e. high over the bottom) to avoid that vortices being created by changes of the free width above $h_{reti}$ are sufficiently spaced from the support opening to ensure they do not negatively affect the laminar flow over the support opening and preferably do to collect smoke or other debris being generated during the fusing process.

The first position of the recoater may be inside a first recoater garage (first garage for short) of the process chamber housing. The first recoater garage may be a storage volume configured to house the recoater. The first recoater garage may be separated from the process chamber at least by a first movable portion of a first side wall of the side walls enclosing the process chamber. The first side wall's first movable portion is preferably movably supported to be moved between a closed position and an open position, wherein if in the closed position, the first movable portion of the first side wall closes a first garage opening of the first recoater garage in the first sidewall and when in the second position releases the first garage opening. In other words, the first garage may have a first garage's door (first garage door, for simplicity), being provided, e.g., at least by the first portion of the movable portion of the first side wall. Thereby, when first side wall's first movable portion is closed, the width $w_c(l, h)$ can be maintained at least essentially constant along the direction of the flow path for a given height $h$ as explained above, as well in the area in front of the garage, provided the first side wall's first movable portion is closed. The first side wall's first movable portion, when in its open position does not block the first garage opening and in this sense releases the first garage opening.

In case the first side wall's first movable portion is closed and the recoater is parked in its first position, the recoater does not affect the laminar inert gas flow and in particular does not provide for any turbulences or vortices which may cause unintended transportation of powder. The first side wall's first movable portion on the other hand enables to temporarily open and thereby release the first garage opening enabling the recoater to move forward towards the recoater's second position and backwards via the first garage opening into the first garage. Thus, the free width constraint as defined above may be temporarily released, to enable recoating of the support.

In a preferred example, the front side of the recoater may be the first movable portion of the first side wall. For example, the first side wall's first movable portion may be attached to or integrally formed by the forward facing side of the recoater. To avoid ambiguities it is recalled that the forward facing side of the recoater, may be the side facing towards the recoater's second position, if the recoater is in the recoater's first position. Thus, once the recoater is parked in its first position, the garage may be closed by the recoater itself. No further movable parts are required and no control mechanism for opening the garage door prior to and subsequent to recoating has to be provided. This provides a less expensive and reliable garage door, which may be provided by the first movable portion of the first side wall. In other words the recoater's front side may close the garage opening, if the recoater is in its first position. The first garage opening may be released, i.e. opened, if the recoater is moved from the recoater's first position towards the recoater's second position, thereby shifting the first sidewall's first movable portion. In the first position, the front side of the recoater is preferably flush with a (e.g. static) portion of the first side wall defining the first garage opening. In other words, the recoater's front side may be the first garage door and/or at least a portion of the first garage door.

Particularly preferred, the first side wall may have a second movable portion, being movably supported to be moved between a closed position and an open position. The second movable portion may keep the first garage opening closed, independently from the recoater's present position. At least, independently from the recoater's present position, if the recoater is not in its first position and/or while transitioning from a position outside the first garage into the first garage or vice versa. For example, the first side wall's second movable portion may be in its closed position, if the recoater is in the recoater's second position and/or at any other position being outside the first garage. Like the first side wall's first movable portion, the first side wall's second movable portion is preferably flush with the (preferably) static portion of the first side wall defining the first garage opening, when the first side wall's second movable portion may be in its closed position. The second movable portion of the first sidewall may be considered as the first garage's second garage door, or to use the prior wording as the 'second first garage door' or 'second first garage's door'.

Generalizing, one may say that the first garage may have at least two first garage's doors (i.e. a first first garage('s) door and a second first garage('s) door), being independently able to close the first garage opening, provided the first garage opening is not already closed by the respective other garage door. In other words, at any time at least one of the two garage doors is not in its closed position. As already apparent, the first first garage's door can be (at least in part) the first sidewall's first movable portion and the second first garage's door can be at least in part the first side wall's second movable portion. The first first garage door may close the first garage if the recoater is in its first position and release the first garage opening if the recoater is not in the recoater's first position. The second first garage door may be configured to close the first garage opening at least if the recoater is in its second position, preferably if the recoater is not inside the first garage. Further, the second first garage door is preferably configured to be open, in case the recoater is in the first garage (i.e. at its first position).

Keeping the first garage opening closed by the first side wall's second movable portion enables to minimize perturbations of the inert-gas flow through process chamber during the recoating process and thereby to increase the gas flow rate during the recoating process. Smoke can be removed efficiently as well during the recoating process, in particular, if the first side wall's first movable portion is attached to or integrally formed by the forward facing side of the recoater. In particular, in case the recoater is in its second position, the inert gas flow is not perturbed by the first garage opening, in case it is closed by the first side wall's first or second movable portion. In practice small gaps are acceptable.

Preferably, a seal is attached to the first and/or second movable portions and/or the first garage opening defining portion of the first sidewall, wherein the seal(s) is(are) configured to close a gap between first and/or second movable portions and other (e.g. static) portions of the sidewall. For example, the seal may be a brush seal, an elastic profile or the like.

Preferably, the second movable portion of the first side wall is biased towards the second movable portion's closed position. Biasing may be obtained by elastic means, like e.g. a spring, and/or by gravity preloading the respective side wall's second movable portion into its closed position. Biasing simply means that the potential energy of the second movable portion has a maximum in case it is open and a minimum in case is closed. Thus, as soon as the recoater leaves the first garage towards its second position, the second movable portion of the first side wall closes the first garage opening. Only to avoid ambiguities, it is noted that the second movable portion of the first side wall may be the only movable portion of the first side wall. "First" and "second" are thus only used to clearly differentiate between two different movable portions of the first sidewall, i.e. none of the movable portions necessarily requires the respective other, but in a preferred embodiment both are present.

Particularly preferred, the recoater has an abutment configured to entrain the second movable portion of the first sidewall into its open position if the recoater moves in the backward direction through the first garage opening towards the recoater's first position. This mechanism is reliable, sturdy and does not involve complex electronics, software or other means susceptible to failure and thus ensures the second movable portion automatically opens, if the recoater moves into its first position.

For example, the second movable portion of the first sidewall can be movably supported, e.g. by at least one bearing, enabling the second movable portion to translate and/or pivot and/or rotate relative to another, e.g. a static, portion of the first sidewall. The movable support may comprise at least one bearing configured to enable the second movable portion to move vertically, backwards or sideward or be folded to be thereby moved from the closed into its open position and vice versa. This movement may be driven by the recoater entraining the second movable portion of the first sidewall.

In a preferred example, the process chamber housing may comprise a dust removal apparatus. The dust removal apparatus may be installed in the first garage and/or be attached to the second movable portion of the first sidewall.

For example the dust removal apparatus may be positioned to contact and/ or slide over at least a portion of a surface of the recoater while the recoater enters or leaves the first garage opening, for example when the recoater entrains the second movable portion of the first sidewall into its open position.

The dust removal apparatus, may comprise at least one of a wiper, a brush, a piece of fabric and a suction nozzle configured to remove contaminants from the recoater and/or the floor of the garage. Thereby the effects of unintended dust migration can be reduced.

Particularly preferred, the process chamber housing has a second recoater garage (second garage for short). The second recoater garage may be at the recoater's second position, in other words, the recoater's second position may be in the second garage. Thus, the recoater may travel over the support opening from the first (recoater) garage to the second (recoater) garage, thereby reducing the down time of the laser during recoating, as the recoater can be parked at opposite sides of the support opening without disturbing the inert-gas flow over the support opening.

For example, the contour or the second garage opening in the second side wall and the contour of the second side wall's first movable portion may match.

Preferably, the second garage is separated from the process chamber at least by a first movable portion of a second side wall of the side walls. The second garage has a second garage opening being defined by a (e.g. static) portion of the second side wall. As already apparent, the second side wall is preferably the side wall being opposite to the first side wall. The second garage opening may be mirror symmetrical to the first garage opening. The symmetry enhances the inert gas flow and reduces manufacturing costs.

The second side wall's first movable portion may be movably supported to be moved between a closed position and an open position. The second side wall's first movable portion, when in the open position does not block the second garage opening and in this sense releases the second garage opening. The second side wall's first movable portion, when in the closed position may close the second garage opening in the second sidewall and when in the open position releases the second garage opening. The second side wall's first movable portion, when in its closed position is preferably flush with the surface of the second side wall next to the second garage opening and faces towards the first side wall. In case the second side wall's first movable portion is closed, the laminar inert gas flow in the process chamber is not or only very little impacted by the transitions from the second side wall's first movable portion to the surrounding portion of the second side wall. The second side wall's first movable portion may be considered as a garage door of the second garage, 'second garage door' for short.

For example, the recoater's rearward facing side may be at least a first part of the second side wall's first movable portion and may close the second garage opening, when the recoater is in the recoater's second position. Thus the recoater's rearward facing side may be at least a portion of the second garage's door. For example, the contour or the second garage opening in the second side wall and the contour of the second side wall's first movable portion may match. In practice, a gap may be acceptable, provided the gap width is small. The gap can be considered small, if the diameter of vortices of the inert-gas flow created by the gap are smaller than the distance between the second side wall and the support opening.

For example, the second side wall's first movable portion may be attached to or integrally formed by the rearward facing side (rear side) of the recoater. As already apparent, the recoater's rear side is the recoater's surface facing towards the recoater's first position while being parked in the recoater's second position.

Very similar to the first side wall, the second side wall may have a second movable portion, being movably supported to be moved between a closed position and an open position. The second movable portion of the second side wall closes the second garage opening if the second movable portion is in its closed position, and enables access to the second garage and/or the process chamber, if the second movable portion of the second side wall is in its open position. In particular, if the recoater is in the recoater's second position, the second movable portion may be configured to remain in its open position.

Generalizing, one may say that the second garage may have at least two garage doors, being independently able to close the second garage opening, provided the second garage opening is not already closed by the respective other second garage's door. In other words at least one of the two garage doors is not in its closed position. As already apparent, the first second garage's door can be (at least in part) the second sidewall's first movable portion and the second second garage's door can be at least in part the second side wall's second movable portion. The first second garage door may close the second garage if the recoater is in its second position and release the second garage opening if the recoater is not in the recoater's second position. The second second garage door may be configured to close the second garage opening at least if the recoater is in its first position, preferably if the recoater is not inside the second garage. Further, the second second garage door is preferably configured to be open, in case the recoater is in the second garage (i.e. at its second position).

The first movable portions of the first and second side walls, while being in their respective closed positions, are preferably symmetric to a vertical plane extending in the main flow direction. Similarly, the first and second garage openings are preferably symmetric to said vertical plane. This eases manufacturing and keeps the inert-gas flow at least essentially symmetric.

For example, the process chamber housing may comprise at least one raw material dispenser. The raw material dispenser may have at least one raw material outlet being positioned above the recoater's first position in the first garage and/or above the recoater's second position in the second garage, thereby being configured to provide the optional recoater with raw material while being parked in the first and/or second position(s), respectively.

Particularly preferred, the open position of the second movable portion of the first sidewall is below the garage opening, forms in its open position at least the portion of a garage floor and/or of a garage wall. In any of these cases, the first and or second side wall's second movable portion, when in their open positions, are not positioned in between of the optional raw material outlet and the corresponding refill opening of the optional recoater, thereby enabling to refill the recoater from the top while being parked in the first garage and/or second garage.

Preferably, the first and/or second side wall(s) may extend at least essentially parallel to the main flow direction. This provides for an at least essentially constant free width $w_c(l, h)$ for a given h. At least essentially parallel (perpendicular) means that parallel (perpendicular) is preferred, but small deviations, e.g. $\pm 15°$, $\pm 7.5°$, $\pm 5°$, $\pm 2.5°$, $\pm 1°$ or less (preferably $\pm 0°$) can be accepted.

The above described measures, in particular the constraint on the free width $w_c(l, h)$ further enables to reduce the width and thereby the footprint of the process chamber housing. Manufacturing and operating costs can be reduced. For example, the distance from the support opening to the first and second side walls may be reduced e.g. to 5cm or less preferably to 4cm, to 3cm, to 2cm to 1cm or less. The optimum distance is about 1.25 to 1.5 times the thickness of the laminar boundary layer ($d_{lbl}$) adhering to the first and second side walls. Theoretically, the optimum distance would be the thickness of the laminar boundary layer, however in practice minor perturbations of the laminar flow cannot be entirely avoided, for example because small gaps between static and movable portions of the first and second side walls cannot be avoided. Even optional sealants may provide for changes of the width $w_c(l, h)$. In a preferred example, the free width obeys the relation $w_s - d_m$

$\leq w_c(l,h) \leq w_s + d_m \; \forall l \in [l_1, l_2]$, wherein $1.25 \cdot d_{lbl} \leq d_m \leq 1.5 \, d_{lbl}$ at a given height $h$. The thickness of the laminar boundary layer $d_{lbl}$ is a function of flow velocity, distance from the leading edge and gas properties; it increases with the flow speed in the center of the process chamber. For practical purposes $d_m$ can be selected to be lower equal to 6 cm, e.g. $d_m \in \{6cm, 5cm, 4cm, 3cm, 2cm\}$.

In a preferred example, $d_m$ may be selected lower than 1/4 of the width of the support opening $w_s$ and larger than 1/25 of the width of the support opening, i.e.

preferably $\quad \dfrac{1}{25} \cdot w_s \leq d_m \leq \dfrac{1}{4} \cdot w_s$, $\quad$ e.g.

$$d_m = \frac{1}{5} \cdot w_s, \quad d_m = \frac{1}{10} \cdot w_s, \quad d_m = \frac{1}{15} \cdot w_s.$$

In a preferred example, the floor may comprise at least one additional opening between the support opening and the first sidewall and/or between the support opening and the second sidewall. The distance between the additional opening and the support opening is preferably in between of 10cm and 0.5cm. A preferred value is 5cm $\pm$ 0.5cm or bigger. Other reasonable distances are 4cm, 3cm, 2cm, 1cm or less. Particularly preferred, the floor does not comprise an opening between the support opening and the first sidewall and/or does not comprise an opening between the support opening and the second sidewall.

Preferably, at least a portion of the rear wall is inclined towards the gas inlet. In other words, the distance of said portion of the rear wall to a vertical plane being defined by the front wall and/or by the gas inlet decreases with increasing height $h$ over the bottom. This portion of the rear wall is preferably a portion above the gas outlet. The gas outlet may as well be at least in part in said inclined portion. These measures enable to reduce the vertical extension of the gas outlet without compromising the gas flow in the process chamber. In particular, if the gas outlet is in the lower half, preferably in the lower third, quarter or fifth of the rear wall, the inclined portion provides for an inert gas flow having a downward component. This downward component helps to reduce condensation of smoke on the ceiling. This reduces scatter of radiation energy being provided via a window in the ceiling to the powder in the support opening of the bottom. In particularly preferred example, at least a portion of the gas inlet is located in the upper half, preferably in the upper third or upper quarter or upper fifth of the process chamber. In a particularly preferred example, the gas inlet and/or the gas outlet extends over at least 75% (even more preferred in increasing order: 80%, 90%, 95%, 100%) of the height of the front wall.

In a preferred example, the process chamber housing has at least one door. The door is preferably installed above the first garage opening and/or above the second garage openings. The at least one door may form another portion of the first side wall and/or of the second side wall, respectively. Opening the door enables to access the process chamber, e.g. for maintenance purposes.

The at least one door can be retrofitted. In this case the process chamber housing has a first (inner) door and a second outer door with a space in between, wherein at least a portion of the bottom of the space between the two doors may be a ceiling of a first or a second recoater garage. The piece forming the bottom of the space and the ceiling of the garage is not necessarily the same, but the dimension $d_b$ of the bottom of the space measured perpendicular to the main flow direction is preferably at least the width of a garage $w_g$ being positioned below the space, wherein $w_g$ is measured as well perpendicular to the main flow direction, minus the width of the inner door $w_{di}$, i.e. $d_b \geq w_g - w_{di}$. Having two doors simplifies the housing, as the doors may serve different purposes. The outer door may have all the safety features required and enclose the process chamber at least essentially hermetically. The outer door may be configured to be locked during additive manufacturing, in particular during fusing of powder. The inner door may be much simpler and may be configured to guide the inert gas flow from the front to the rear wall. In an example, the inner door may be a glass pane being hinged relative to side walls, e.g. relative to the front and/or rear walls.

The corresponding additive manufacturing apparatus for manufacturing three-dimensional objects from a raw material, has a process chamber housing as described above, a radiation source configured to fuse powder particles on a support in the support opening of the bottom and an inert gas source being in fluid communication with gas inlet. Further, the apparatus may comprise a controller optionally configured to control the position of the support and/or the movement of the optional recoater and/or the position of movable portions of the first and second side walls and the direction and/or the intensity of a beam emitted from the radiation source (e.g. of a laser beam being emitted by a laser).

Only to avoid misunderstandings, in the field of additive manufacturing *inert gases* are gases that do not react under the process conditions with the raw material, i.e. in the example of powder fusing with the powder. Typical examples are Argon and the other noble gases, Nitrogen and of course mixtures thereof.

The term powder is herein used a synonym for a raw material powder. The powder preferably has a grain diameter $\varphi_g \leq 100\mu m$. For example, the powder may be of a metal, an alloy or a blend of metals and/or alloys. However, the invention is not limited to these powders, alternatively the powder may be a thermoplastic powder, of glass and/or of a ceramic precursor or of mixtures of all these materials.

The word "fusing" is herein used as a part pro toto for any mechanism enabling to adhere powder grains to each other by irradiating the powder grain with an energy beam to thereby form a workpiece. The powder grains may be sintered, welded, glued or be attached to each other by other mechanism.

Movable support can be provided by at least one rotary bearing and/or at least one linear bearing, e.g. by at least one hinge and/or a telescopic joint.

**Description of Drawings**

In the following, the invention will be described by way of example, without limitation of the general inventive concept, on examples of embodiment with reference to the drawings.

Figure 1 shows a simplified sketch of a sectional view of a process chamber housing.

Figure 2 shows another simplified sketch of the process chamber housing.

Figure 3 shows a simplified sketch of a sectional view of a process chamber housing,

Figure 4 shows a simplified sketch of a sectional view of the process chamber housing of Fig. 3,

Figure 5 shows a simplified sketch of another the process chamber housing.

Figure 6 shows a sectional view of a detail of a first garage without a recoater.

Figure 7 shows a sectional view of a detail of the garage of FIG. 7 with a recoater.

Figure 8 shows a sectional view of a detail of the first garage without a recoater.

Figure 9 shows a sectional view of a detail of a garage of FIG. 8 with a recoater.

Figure 10 shows a sectional view of a detail of a garage similar to the one of FIG. 8 and 9 with a recoater.

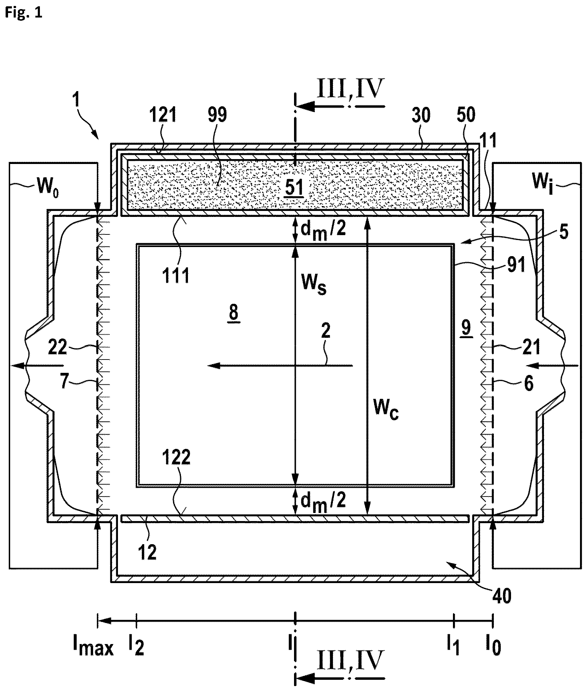

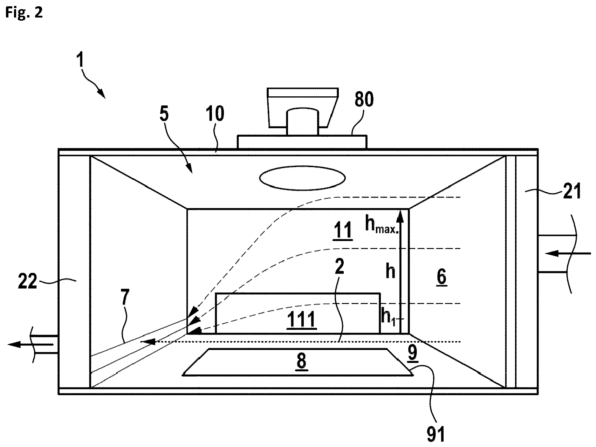

FIG. 1 shows a simplified sketch of a process chamber housing 1 approximately at the height $h_1$ as shown in FIG. 2. FIG. 2 is a perspective side view of a process chamber housing 1, being very similar to the process chamber housing 1 in FIG.1, wherein a second side wall 12 (see FIG. 1) has been removed. The process chamber housing 1 has a first sidewall 11 and a second side wall 12 being opposed to each other and having a length $l_{max}$. Further, the process chamber 5 (FIG. 1 and 2) is delimited by a front wall 21 and by a rear wall 22. In this example, the contour of each of the four walls 11, 12, 21 and 22 is plane, at least with respect to the side walls 11, 12 this is a preferred example, other shapes are not excluded. A bottom 9 with a support opening 91 for an optional support 8 delimits the process chamber 5 downwards and a ceiling 10 (see FIG. 2) upwards.

As can be seen in FIG. 1 and FIG. 2, the front wall 21 has a gas inlet 6 configured to provide a main gas flow in a main-flow direction 2 (indicated by arrow 2) towards a gas outlet 7 in the rear wall 12. In the Figures, the gas inlet 7 is a porous material extending over the entire surface of the front wall, however it should be noted that this is only an preferred example of a gas inlet 7. Other gas inlets can be used as well. In particular, the gas inlet may cover or form only at least one sub portion of the front wall. For example, the gas inlet can be formed by a one or more slots the front wall. In addition, some examples may also comprise gas inlet openings in the ceiling 10 of the process chamber 5 for providing a support gas flow. The distance between the front wall and the rear wall defines the length $l_{max}$ of the process chamber (see FIG. 1). The distance from the front wall 21 is thus measured parallel to the main-flow direction 2 as indicated by the axis I, having $l_0 = 0$ at the vertical plane through the bottom of the front wall 21. The gas inlet 6 and the gas outlet 7 may each have a width $w_i$ and $w_o$, respectively, being measured at least essentially perpendicular to the main-flow direction 2 (see FIG. 1).

In these examples, the distance between the first and second side walls 11, 12 is the free width $w_c(l, h)$ enabling an inert gas flow being indicated in FIG. 1 by small parallel arrows leaving the gas inlet 6 and entering the gas outlet 7. Thus, the gas flow transports smoke being generated during fusing of powder on top of the support 8 towards the gas outlet 7 in the rear wall 22. In general $w_c$ is a function of the distance $l$ from the front wall 21 and the height $h$ over the bottom (see FIG. 2), i.e. $w_c = w_c(l, h)$. In the example as shown in FIG. 1 to 4, the free width is constant (neglecting minor gaps in the side walls 11, 12), i.e. $w_c(l, h) = c = w_{max}$, $Vl \in ]l_0, l_{max}[$, at a given height $h$. As explained above, this is a preferred example, in practice small variations $\Delta_w$ can be accepted, i.e. $w_c(l, h) = c \pm \Delta_w \cdot w_{max} \ \forall l \in [l_1, l_2]$.

Due to the at least essentially constant free width $w_c(l, h)$ of the process chamber, the distances $d_m/2$ between the support opening 91 and first and second side walls 11, 12 can be rather small. It should be noted that in these preferred examples, the distances $d_m/2$ are not drawn to scale but have been enlarged.

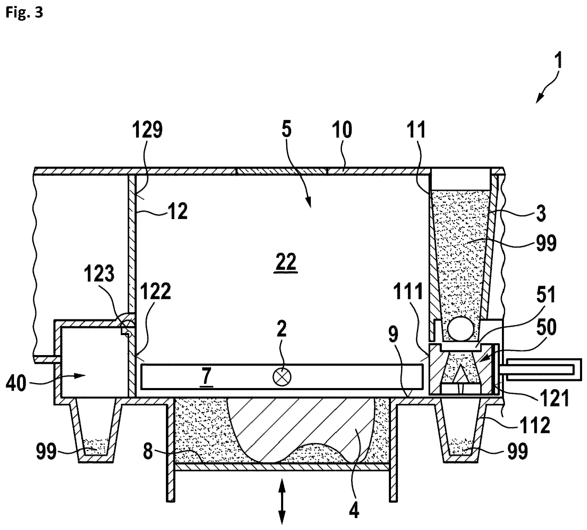

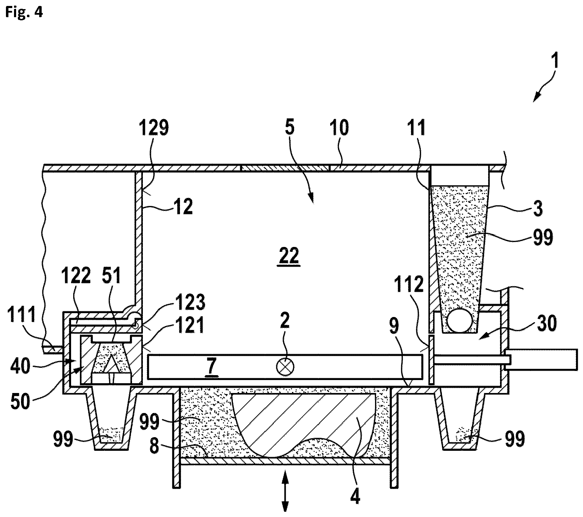

Each side wall 11, 12 has first and second movable portions 111, 112, 121 and 122, respectively, wherein in the sketch of Fig. 1 only the first side wall's first movable portion 111 and the second side wall's first and second movable portions 122 are shown, indicated as surfaces. The remaining movable portions 112 and 121 are shown in FIG. 3 and 4.

FIG. 3 and FIG. 4 show simplified cross sectional views, of the process chamber housing 1 of FIG. 1 and FIG. 2, wherein the section plane is at least essentially perpendicular to the flow direction 2 as depicted in FIG. 1 and somewhere in between of $l_1$ and $l_2$, e.g. approximately at the planes III and IV being indicated in Fig. 1. Thus, the description of FIG. 1 and FIG. 2 can be read on FIG. 3 and FIG. 4 as well.

As shown in FIG. 1, FIG. 3 and FIG. 4, the process chamber housing may comprise a recoater 50 having a raw material reservoir 51. In FIG. 1 and FIG. 3, the recoater 50 is shown in an initial position, as well referred to herein as the recoater's first position. In this first position, the recoater 50 is positioned in an optional first recoater garage 30. The first recoater garage 50 may be separated from the process chamber 5 by a first movable portion 111 of the first sidewall 11. Thus, the first movable portion 111 of the first sidewall 11 is shown in the first sidewall's first movable portion's closed position, essentially closing the first garage opening in a static portion of the first sidewall 11 (see FIG. 1 and 3). A second movable portion 112 of the first sidewall 11 may be stowed in the first garage 30 at the rear side 121 of the recoater 50 and thus in the first sidewall's second movable portion's open position. Preferably, the second movable portion 112 of the first sidewall 11 is biased toward its closed position, being shown in FIG. 4.

Still referencing to FIG. 3, the process chamber housing 1 may further comprise a second recoater garage 40, being empty in FIG. 3. The second recoater garage 40 may as well be separated from the process chamber 5 by a movable portion 122 of the second side wall 12. We will refer to this movable portion 122 as the second sidewall's second movable portion. The second side wall 12 may as well have a first movable portion 121, which is integrally formed by the rear side of the recoater 50 and is shown in FIG. 3 in its open position, as it is stowed in the first garage 30.

After the upper layer of the raw material 99 has been partially fused to a part of a workpiece 4, the support 8 is lowered by the thickness of a layer of raw material 99. Next, the recoater 50 is moved from its first position to its second position, i.e. into the second garage 40, thereby applying a new layer of raw material into the support opening 91. Whereas FIG. 3 shows the recoater 50 in its first position, FIG. 4 shows the recoater 50 after having moved over the support opening 91 into its second position.

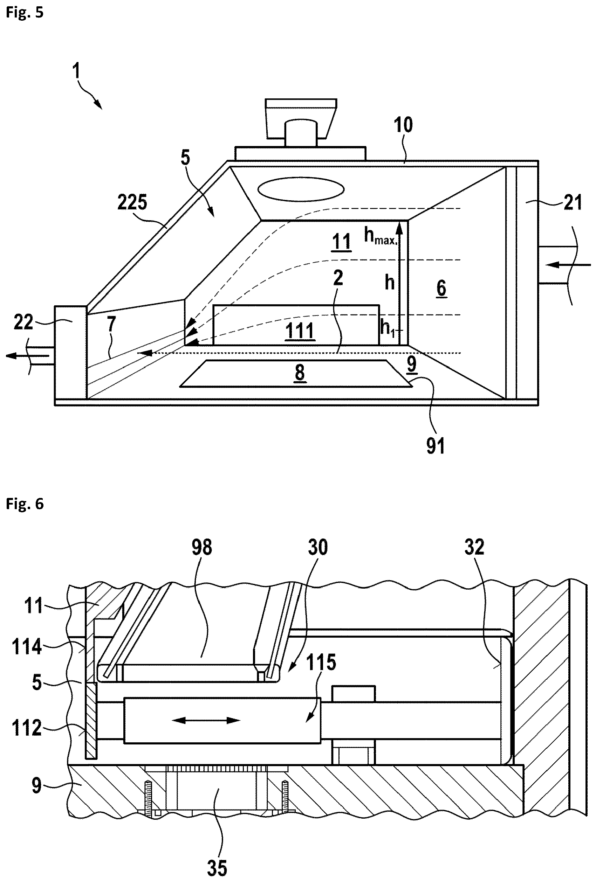

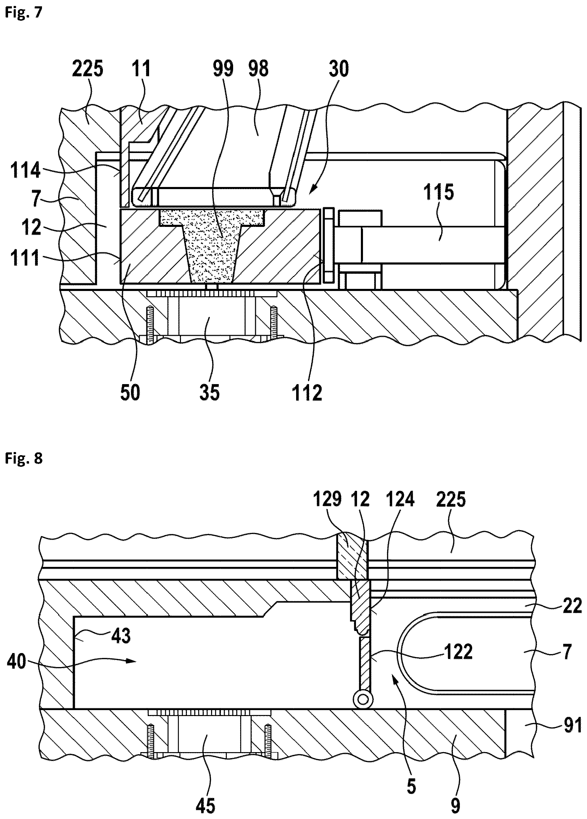

As can be seen in FIG. 4, the first sidewall's second movable portion 112 is shifted horizontally into the first garage opening into the first sidewall's second movable portion's 112 closed position. The first sidewall's second movable portion 112 is preferably horizontally movable, e.g. supported by a linear bearing enabling an at least essentially horizontal movement of the first sidewall's second movable portion 112 from its open position (FIG. 3) into its closed position (FIG.4) and back into its open position (cf. FIG 6 and 7). The first sidewall's second movable portion 112 is preferably biased into its closed position. Thus, as soon as the recoater 50 is moved forward towards the recoater's second position, the first sidewall's second movable portion 112 follows the recoater 50 until the first sidewall's second movable portion 112 reaches it closed position.

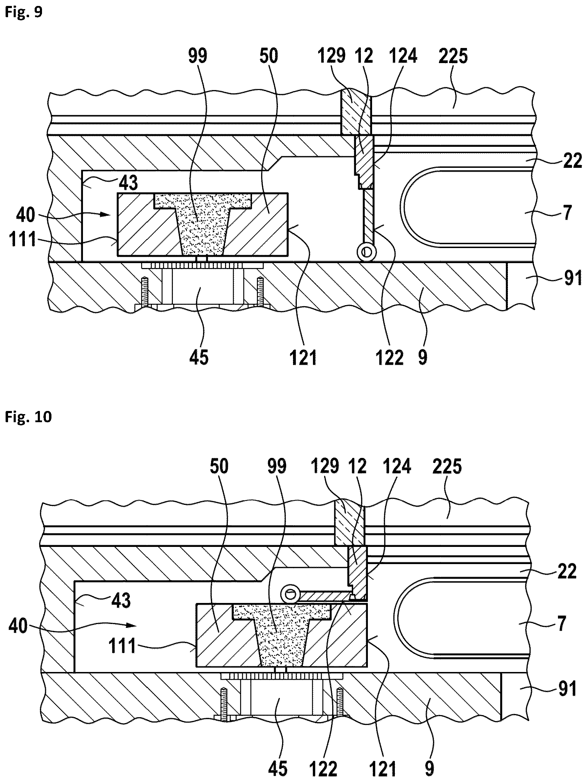

Once the recoater 50 approaches the second garage opening, it abuts the second side wall's second movable portion 122, thereby moving second movable portion 122 into its closed position (by moving on into the recoater's second position) as shown in FIG. 4. As shown in this example, it is advantageous if the second side wall's second movable portion is hinged relative to static portion of the second side wall 12, wherein the pivot axis is at least essentially parallel to the main flow direction 2 and above the recoater's top. Thereby, the raw material reservoir 51 of the recoater 50 is closed by the second side wall's second movable part. Superfluous raw material 99 may fall into a tray 45 (cf. Fig. 8 and 9) in the second garage's bottom.

As shown in Fig. 4, the second garage opening may be closed by the first movable portion 121 of the second side wall 12. The first movable portion 121 of the second side wall 12 may be integrally formed or be attached to the rear side of the recoater 50. Another portion of the second garage opening may be closed by a third movable portion123 of the second side wall 12, being moved into the garage opening and thus into its respective closed position, when the second movable portion 122 is moved into its open position. In this optional example, the third movable portion 123 is provided by a free leg being attached to an end of the second movable portion 122 of the second side wall. Thereby gaps are minimized. Alternatively, the second movable portion 122 could be movably supported differently, e.g. by at least one linear bearing as shown for the second movable portion 112 of the first side wall 11. This has the advantage of less different parts, but may increase the footprint of the process chamber housing 1.

Once the newly added layer of raw material has been at least partially fused to the workpiece 4 and the support has been lowered, the recoater 50 maybe moved backwards into its first position, thereby applying a next layer of raw material 99 onto the support. While the recoater 50 passes the second garage opening, the second movable portion 122 of the first second wall 12 enters its closed position. For example second movable portion 122 of the second side wall 12 may simply pivot, e.g. by gravity into its closed position. As soon as the recoater 50 reaches the first garage opening, it retracts the second movable portion 112 of the first side wall into its open position, while the fist movable portion 111 of the first sidewall 11 closes the first garage opening (as shown in FIG. 3). The optional raw material dispenser 3 being positioned above the recoater 50 may replenish the recoater's raw material reservoir 51 and the cycle may be repeated until the workpiece 4 is finished.

The process chamber housing 1 in Fig. 5 is very similar to the process chamber housing 1 in Fig. 2. The description of Fig. 2 can be read on FIG. 5 as well and FIG. 2 could be replaced by FIG. 5, i.e. FIG. 5 has to be read in the context of FIG. 1, 3 and 4, as well. Different from the example of FIG. 2, the rear wall 22 of the process chamber housing 1 has an optional inclined portion 225. The optional inclined portion 225 is a guide plate 225 being positioned above the outlet opening 7. The guide plate delimits the process chamber in the flow direction 2 and is thus a part of the rear wall 22. The guide plate 225 connects a non-inclined portion of the rear wall 22 with the ceiling 10. As apparent from FIG. 5, the inclined portion 225 (i.e. the guide plate) is inclined towards the front wall 21. In other words, with increasing height, the distance between the rear wall 22 and the front wall decreases. In operation the inclined portion 225 thus provides for an (inclined) downdraft a without dead volume. Further, the downdraft (see dashed lines) removes up drafting smoke which cannot be entirely avoided due to the heat being released by the fusion process.

FIG. 6 shows a sectional view of a detail of an empty garage 30, i.e. of a first garage without recoater 50 which could be parked and refilled in the garage 30. The first garage 30 has a space being delimited towards the process chamber by a first sidewall 11 of the process chamber 5 (cf. Fig. 1 to 5). The bottom plate, forming the bottom 9 of the process chamber 5 as shown in FIG. 1 to 5 may extend into the first garage 30, providing a garage bottom. Preferably, the garage bottom has raw material fall through removal tray 35, removal tray 35 for short, preventing the accumulation of raw material in the first garage 30. Above the removal tray 35 may be an outlet 98 of a dispenser 3 (see Fig. 2 and 5), as well referred to as raw material dispenser outlet 98. Preferably, the first position of the recoater 50 is in between of the removal tray 35 and the raw material dispenser outlet 98, as apparent from Fig. 7.

A static portion 114 of the first sidewall 11 may define the first garage opening. The first garage opening may be closed by a first movable portion 111 and/or by a second movable portion 112 of the first sidewall. In FIG. 6, the first garage opening is shown closed by the optional second movable portion 112 of the first sidewall 11. The second movable portion 112 of the first side wall 12 may be movably supported enabling the second movable portion 112 to be moved from its closed position being shown in Fig. 6 into an open position as shown in FIG.7. Preferably, the second movable portion 112 of the first side wall 11 is supported by a linear bearing, enabling a horizontal movement of the second movable portion 112 towards a rear end 32 of the first garage 30 as shown in Fig. 7. As usual, the rear end 32 is the end opposite of the garage opening.

FIG. 7 shows a sectional view of a detail of the first garage of FIG. 6 after a recoater 50 has been parked in the first garage, i.e. in the recoater's first position. As can be seen, the front surface of the recoater 50 may close the first garage opening and may thus provide the first movable portion 111 of the first side wall 11. The rear surface of the recoater 50 may provide an abutment configured to entrain the second movable portion 112 of the first sidewall, if the recoater 50 is moved into the first garage 30. Preferably, the second movable portion of the first sidewall 11 is biased, e.g. spring loaded, towards its closed position. Alternatively or additionally, the second movable portion may comprise a first first coupling portion configured to releasably couple mechanically with a first second coupling, wherein the two coupling portions are configured to transmit a pulling force from the recoater 50 to the second movable portion 112. In this example, the movement of the recoater out of the first garage entrains the second movable portion into its closed position. In the closed position the coupling opens and the recoater may continue its moment towards the second side wall 12. The coupling may be a positive locking and and/or magnetic coupling. Thus, the first garage opening is preferably only open, while the recoater 50 passes first garage opening. Perturbations of the inert gas flow (cf. Fig. 1 to 5) by the first garage opening are thus limited to a minimum.

While the recoater 50 is parked in the first garage 30 in the first position it may be refilled with raw material 99. Preferably, a second garage 40 is at the opposite side of the process chamber 5, as shown in Fig. 8 and 9. Similarly to the first garage 30, the second garage 40 may have a space being delimited towards the process chamber 5 by a second sidewall 12 of the process chamber 5 (cf. Fig. 1, 3 to 5). The bottom plate, forming the bottom 9 of the process chamber 5 as shown in FIG. 1 to 5 may extend as well into the second garage 40, providing a garage bottom. Preferably, the second garage bottom has second raw material fall through removal tray 45, removal tray 45 for short, preventing the accumulation of raw material in the second garage 30. A raw material dispenser 3 with a raw material dispenser outlet 98 could be realized above the second garage 40, as well, but is preferably omitted as shown.

A static portion 124 of the first sidewall 12 may define a second garage opening. The second garage opening may be closed by a first movable portion 121 and/or by a second movable portion 122 of the second sidewall 12. In FIG. 8, the second garage opening is shown closed by the optional second movable portion 122 of the second side wall 12. The second movable portion 122 of the second side wall 22 may be movably supported enabling the second movable portion 122 to be moved from its closed position being shown in Fig. 8 into an open position as shown in FIG.9. Thus, in this example, the second movable portion 122 may be pivotably supported relative to the garage opening defining portion 124 of the second side wall 12. Moving the recoater 50 further towards the rear end 43 of the second garage 40 may position the recoater right above the second garage's removal tray 45, which is in this example the recoater's second position. In this second position, the second movable portion 122 of the second side wall 12 pivots back into its closed position (FIG. 9). This closed position is preferably flush with the second garage opening defining portion 124 of the second side wall 12 and thus turbulences or other perturbations of the inert gas flow are minimized. Alternatively, the second position of the recoater 50 could be shifted slightly to the process chamber 5, wherein the backward facing surface 122 (indicated by a dashed 'tick line') of the recoater 50 provides a first movable portion 121 of the second side wall 12, being preferably flush with the second side wall's second garage opening defining portion 124 (see FIG. 10). In this case, the second removal tray 45 is preferably shifted as well, so that it is under the recoater 50 in its second end position.

As can be seen in Fig. 8 to 10, above the second garage opening defining portion 124 of the second wall is a movable door 129, forming a part of the second wall 12 and enabling to access to process chamber 5. In FIG. 1 to 5, this door has been omitted for simplification and is preferably flush with neighbored portions of the second side wall 12.

In the Figures, portions of walls are indicated by 'ticks' referring to the process chamber facing surface of the respective portion.

List of reference numerals

| | |
|---|---|
| 1 | process chamber housing |
| 2 | gas flow direction, longitudinal axis |
| 3 | raw material dispenser |
| 4 | workpiece / adhered moieties of raw material |
| 5 | process chamber |
| 6 | gas inlet |
| 7 | gas outlet |
| 8 | support |
| 9 | bottom |
| 91 | support opening in bottom 9, configured to receive support 8 |
| 10 | ceiling |
| 11 | first sidewall |
| 111 | first movable portion of first sidewall |
| 112 | second movable portion of first sidewall |
| 114 | first garage opening defining portion of first sidewall |
| 12 | second sidewall |
| 121 | first movable portion of second sidewall |
| 122 | second movable portion of second sidewall |
| 123 | second movable portion of second sidewall |
| 124 | second garage opening defining portion of second sidewall |
| 129 | door (part of second wall 12) |
| | |
| 21 | front wall |
| 22 | rear wall |
| 225 | guide plate |
| 30 | first garage (optional) |
| 32 | rear end of first garage |
| 35 | raw material removal duct |
| 40 | second garage (optional) |
| 42 | rear end of second garage |
| 45 | raw material removal duct |
| | |
| 50 | recoater |
| 51 | recoater's reservoir |
| 80 | beam generating unit / laser unit |
| 98 | raw material dispenser outlet |
| 99 | raw material / powder |
| | |
| $l$ | distance from vertical plane through the bottom of the front wall |
| $w_s$ | width of the opening and/or of the support |
| $w_c(l, h)$ | width of the chamber |
| $w_i$ | width of the gas inlet |
| $w_o$ | width of the gas outlet |

**Claims**

1. A process chamber housing (1) for an additive manufacturing apparatus, the process chamber housing (1) comprising a process chamber (5), wherein the process chamber housing (1) has at least:

   - a bottom (9), a ceiling (10) and side walls (11, 12, 21, 22), jointly enclosing a volume of the process chamber (5),
   - a gas inlet (6) in a front wall (21) of the side walls (11, 12, 21, 22), configured to provide a gas flow into the process chamber (5),
   - a gas outlet (7) in a rear wall (22) of the side walls (11, 12, 21, 22) configured to release the gas flow out of the process chamber (5),

   wherein
   the bottom (9) has an opening (91) configured to receive a movable support (8) for supporting a three dimensional object (4),
   the gas inlet (6) and the gas outlet (7) are positioned at opposite sides of the opening (91) and both face towards the each other, thereby being configured to provide the gas flow in a main flow direction (2) from the gas inlet (6) over the opening, to the gas outlet (7), the gas inlet (6) has a width $w_i$, the opening (91) has a width $w_s$ and the gas outlet (7) has a width $w_o$, the widths $w_i$, $w_o$ and $w_s$ being measured perpendicularly to the flow direction (2),
   **characterized in that** $w_i$, $w_o$ and $w_s$ obey at least one of the relations:

   (i) $w_i \geq w_s \pm 4cm$ and $w_o \geq w_s \pm 4cm$.
   (ii) $w_i \geq w_s$ and/or $w_o \geq w_s$.
   (iii) $w_i \geq w_s + 1cm$ and/or $w_o \geq w_s + 1cm$.

2. The process chamber housing (1) of claim 1, **characterized in that** the process chamber has a width $w_c(l, h)$, wherein the width $w_c(l, h)$ is measured perpendicular to the main flow direction (2) and is a function of a distance $l$ from a vertical plane being defined by the gas inlet and a height $h$ over a horizontal plane being defined by the bottom, wherein $w_c(l, h) = c \pm 0.15 \cdot w_{max} \ \forall l \in [l_1, l_2]$, at a given height $h$ over the

bottom, wherein $l_1$ is the distance of the opening from the vertical plane defined by the gas inlet, $l_2 = l_1 + l_s$, $l_s$ is the extension of the opening in the main flow direction, $w_{max} = \max(w_c(l, h))$ and c is a constant.

3. The process chamber housing (1) of claim 2, **characterized in that** $h \in [h_{min}, h_{int}]$, wherein $h_{min} \leq 0.1 \cdot h_{max}$, $h_{min} \leq h_{int} \leq 0.25 h_{max}$ and $h_{max}$ is the height of the process chamber (5) from the bottom (9) to the ceiling (10).

4. The process chamber housing (1) of one of claims 1 to 3, **characterized in that** the process chamber housing (1) further comprises at least a first recoater garage (30), wherein

   - the first recoater garage (30) is separated from the process chamber (5) at least by a first movable portion (111) of a first side wall (11) of the walls (11, 12, 21, 22),
   - the first side wall's first movable portion (111) is movably supported to be moved between a closed position and an open position,
   - the first side wall's first movable portion (111), when in the closed position closes a first garage opening in the first sidewall (11) and thereby separates the first recoater garage (30) from the process chamber (5), and when in the open position releases the first garage opening.

5. The process chamber housing (1) of one of claims 1 to 4, further comprising at least one recoater (50) and in that the recoater (50) is movably supported and configured to move in a forward direction from a first position over the support opening (91) to a second position and in a backward direction from the second position to the first position, wherein the recoater (50) has a front side and a rear side facing in the direction of a forward and backward movement of the recoater, respectively, and if dependent from claim 4, the first position is in the first recoater garage (30).

6. The process chamber housing (1) of claims 4 and 5, **characterized in that** the front side of the recoater (50) is the first movable portion (111) of the first side wall (11), wherein the front side closes the garage opening, if the recoater (50) is in its first position and releases the first garage opening if the recoater (50) is moved from the recoater's first position towards the recoater's second position.

7. The process chamber housing (1) of claim 4, 5 or 6, **characterized in that** the first side wall (11) has a second movable portion (112), being movably supported to be moved between a closed position and an open position, wherein the second movable portion (112) is in its closed position, if the recoater (30) is in the recoater's second position.

8. The process chamber housing (1) of claim 7, **characterized in that** the second movable portion (112) of the first side wall (11) is biased towards the second movable portion's closed position, and **in that** the recoater (30) has an abutment configured to entrain the second movable portion (112) of the first sidewall (11) into the first sidewall's second movable portion's open position, if the recoater (30) moves in the backward direction through the first garage opening to the recoater's first position.

9. The process chamber housing (1) of one of claims 4 to 8, **characterized in that**

   - the process chamber housing further comprises a second recoater garage (40),
   - the recoater's second position is in the second recoater garage (40),
   - the second recoater garage (40) is separated from the process chamber (5) at least by a first movable portion (121) of a second side wall (12) of the walls (11, 12, 21, 22),
   - the second side wall's first movable portion (121) is movably supported to be moved between a closed position and an open position,
   - the second side wall's first movable portion (121), when in the closed position closes a second garage opening in the second sidewall (22) and when in the second position releases the second garage opening.

10. The process chamber housing (1) of claim 9, **characterized in that** the recoater's rear side is at least a first part of the second side wall's first movable portion (121) and closes the second garage opening, when the recoater (50) is in the recoater's second position.

11. The process chamber housing (1) of claim 9 or 10, **characterized in that** the second side wall (12) has a second movable portion (122), being movably supported to be moved between a closed position and an open position, wherein the second movable portion (122) of the second side wall (12) is in its closed position, if the recoater (50) is in the recoater's first position and closes the second garage opening in the second side wall's second movable portion's closed position.

12. The process chamber housing (1) of one of claims 4 to 11, **characterized in that** the first and/or second side wall's normal is perpendicular within $\pm 15°$ to the flow direction (2).

13. The process chamber housing (1) of one of claims 2 to 12, **characterized in that** $w_s \leq w_c - d_m$, wherein

$1cm \leq d_m \leq 30cm.$

14. The process chamber housing (1) of one of claims 2 to 13, **characterized in that** $w_c \geq w_i \geq w_c$ - 5cm.

15. The process chamber housing (1) of one of claims 1 to 14, **characterized in that** at least a portion (225) above the gas outlet 7 of the rear wall (22) is inclined toward the gas inlet (6).

16. An additive manufacturing apparatus for manufacturing three-dimensional objects from a raw material (99), comprising the process chamber housing (1) of one of the previous claims and a radiation source configured to selectively adhere moieties of raw material (99) to a support (8) being positionable in the opening (91) and/or to previously adhered moieties of raw material (4).

17. The additive manufacturing apparatus of claim 16, **characterized in that** the width of the support opening $w_s$ is replaced in the relations of one of claims 1 to 15 by the width of the usable powder bed $w_{upb}$.

**Fig. 1**

**Fig. 2**

Fig. 3

**Fig. 4**

**Fig. 5**

**Fig. 6**

Fig. 7

Fig. 8

Fig. 9

Fig. 10

Europäisches Patentamt

European Patent Office

Office européen des brevets

# EUROPEAN SEARCH REPORT

Application Number

EP 20 18 2341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2018 210260 A1 (EOS GMBH ELECTRO OPTICAL SYSTEMS [DE]) 24 December 2019 (2019-12-24) * paragraphs [0001], [0009], [0013], [0014], [0022], [0028], [0037], [0045], [0069], [0073] - [0075] * * figures 1-6 * | 1-14,16, 17 | INV. B22F3/105 B29C64/153 B29C64/371 B33Y10/00 B33Y30/00 |
| X | EP 3 620 245 A1 (EOS GMBH ELECTRO OPTICAL SYSTEMS [DE]) 11 March 2020 (2020-03-11) * paragraphs [0001], [0009] - [0011], [0013], [0023], [0024], [0087], [0088], [0090], [0098], [0108], [0109], [0127] * * figures 1-6 * | 1-3,13, 14,16,17 | |
| X | US 2020/061653 A1 (WAKELAM CHRISTIAN THOMAS [DE] ET AL) 27 February 2020 (2020-02-27) * paragraphs [0001], [0005], [0023], [0024], [0028], [0031], [0032] * * figures 1-5 * | 1-3, 13-17 | |
| X,D | EP 3 321 003 A1 (SLM SOLUTIONS GROUP AG [DE]) 16 May 2018 (2018-05-16) * paragraphs [0001], [0011] - [0014], [0024] - [0026], [0042], [0046] - [0049], [0054], [0058] * * figures 1-3 * | 1-3,13, 14,16,17 | TECHNICAL FIELDS SEARCHED (IPC) B22F C22C B29C B33Y |
| A | US 2018/281237 A1 (FRECHMAN JAMES [US] ET AL) 4 October 2018 (2018-10-04) * the whole document * | 1-17 | |
| A | US 2018/111198 A1 (VITANOV ANATOLII [US] ET AL) 26 April 2018 (2018-04-26) * the whole document * | 1-17 | |

The present search report has been drawn up for all claims

| Place of search | Date of completion of the search | Examiner |
|---|---|---|
| The Hague | 30 November 2020 | Stocker, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 18 2341

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2020

| Patent document cited in search report | Publication date | Patent family member(s) | Publication date |
|---|---|---|---|
| DE 102018210260 A1 | 24-12-2019 | DE 102018210260 A1<br>WO 2019243559 A1 | 24-12-2019<br>26-12-2019 |
| EP 3620245 A1 | 11-03-2020 | DE 102018215302 A1<br>EP 3620245 A1<br>US 2020078864 A1 | 12-03-2020<br>11-03-2020<br>12-03-2020 |
| US 2020061653 A1 | 27-02-2020 | US 2020061653 A1<br>WO 2020041451 A1 | 27-02-2020<br>27-02-2020 |
| EP 3321003 A1 | 16-05-2018 | BR 112019009342 A2<br>CA 3038232 A1<br>CN 109890538 A<br>EP 3321003 A1<br>JP 2019536907 A<br>US 2019262901 A1<br>WO 2018086887 A1 | 30-07-2019<br>17-05-2018<br>14-06-2019<br>16-05-2018<br>19-12-2019<br>29-08-2019<br>17-05-2018 |
| US 2018281237 A1 | 04-10-2018 | US 2018281236 A1<br>US 2018281237 A1<br>US 2018281282 A1<br>US 2018281283 A1<br>US 2018281284 A1<br>WO 2018183396 A1 | 04-10-2018<br>04-10-2018<br>04-10-2018<br>04-10-2018<br>04-10-2018<br>04-10-2018 |
| US 2018111198 A1 | 26-04-2018 | US 2018111193 A1<br>US 2018111194 A1<br>US 2018111195 A1<br>US 2018111196 A1<br>US 2018111197 A1<br>US 2018111198 A1<br>US 2018111319 A1<br>WO 2018075741 A1 | 26-04-2018<br>26-04-2018<br>26-04-2018<br>26-04-2018<br>26-04-2018<br>26-04-2018<br>26-04-2018<br>26-04-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018156264 A1
- WO 2017143145 A1
- EP 1234625 A
- DE 102006056422 B3
- US 20170001243 A1
- US 9061465 B2
- EP 3321003 A